# EUROPEAN PATENT SPECIFICATION

(11) **EP 3 858 578 B1**
(45) Date of publication and mention of the grant of the patent: **03.08.2022**
(21) Application number: 21154169.3
(22) Date of filing: 29.01.2021
(51) Int. Cl.: B29C 45/76, G05B 23/02, B29C 45/84, G05B 19/406

(54) **ADJUSTMENT DEVICE OF INJECTION MOLDING MACHINE AND INJECTION MOLDING MACHINE**
VERFAHREN ZUM EINSTELLEN EINER SPRITZGIESSMASCHINE UND SPRITZGIESSMASCHINE
DISPOSITIF DE RÉGLAGE DE MACHINE DE MOULAGE PAR INJECTION ET MACHINE DE MOULAGE PAR INJECTION

(30) Priority: 31.01.2020 JP 2020015496
(43) Date of publication of application: 04.08.2021
(73) Proprietor: Sumitomo Heavy Industries, Ltd., Tokyo 141-6025 (JP)
(72) Inventor: MATSUKI, Yusuke, Chiba-shi, Chiba 263-0001 (JP); TANIDA, Kazuki, Chiba-shi, Chiba 263-0001 (JP)
(74) Representative: Louis Pöhlau Lohrentz

(56) References cited:
- WO-A1-2019/049688
- DE-B3-102006 033 421
- US-A1- 2007 093 976
- US-A1- 2014 333 447
- US-A1- 2018 059 656
- US-A1- 2018 345 556
- US-A1- 2019 171 199

## Description

### BACKGROUND OF THE INVENTION

### Field of the Invention

The present invention relates to an adjustment device of an injection molding machine and an injection molding machine.

### Description of Related Art

In a monitoring method of an injection molding machine of Japanese Unexamined Patent Publication No. H5-50480, vibration and operating sound of each operating portion of the injection molding machine are monitored by an acceleration sensor and a microphone for each molding process, a stable state of a cycle time of the molding process is monitored from a cycle of the monitor signal, and occurrence of an abnormality in each operating portion is monitored from an abnormal value of each monitor signal.

In addition, monitoring methods by using sound data, a resonant frequency, a current, a voltage, rotation speed, acceleration, vibration, and temperature of each operating portion of a machine are discussed in United States Patent Publication Nos. 2018/345556 A1; 2007/093976 A1; 2019/171199 A1; 2014/333447 A1; 2018/059656 A1; in PCT Patent Publication WO 2019/049688 A1; and in German Patent No. 10 2006 033421 B3.

### SUMMARY OF THE INVENTION

In the related art, when an abnormal sound such as a vibration sound or a sliding sound is generated by an operation of a machine part of an injection molding machine, the user of the injection molding machine contacts a skilled person such as a repairer, and the skilled person specifies the machine part in which the abnormal sound is generated and adjusts a command for the operation of the machine part. Therefore, the operation of the injection molding machine is continued in a state where an abnormal sound is generated or the operation of the injection molding machine is interrupted until a skilled person arrived.

An aspect of the present invention provides a technique capable of automatically suppressing generation of an abnormal sound when the abnormal sound is generated by the operation of a machine part of an injection molding machine.

According to an aspect of the present invention, there is provided an adjustment device of an injection molding machine including: acquisition unit which acquires an operating sound generated by an operation of a machine part constituting the injection molding machine; an analysis unit which acquires characteristics of the operating sound acquired by the acquisition unit; a storage unit which stores characteristics of an abnormal sound generated by the operation of the machine part; a specifying unit which specifies the machine part in which the abnormal sound is generated from the characteristics acquired by the analysis unit and the characteristics stored in the storage unit; and an adjusting unit which adjusts a command for the operation of the machine part specified by the specifying unit.

According to an aspect of the present invention, when an abnormal sound is generated by the operation of a machine part of an injection molding machine, it is possible to automatically suppress the generation of the abnormal sound.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a diagram showing components of an adjustment device of the injection molding machine according to the embodiment in functional blocks.
Fig. 4A is a diagram showing frequency characteristics of an operating sound in a normal state, Fig. 4B is a diagram showing frequency characteristics of the operating sound in an abnormal state, and Fig. 4C is a diagram showing frequency characteristics of an abnormal sound.
Fig. 5 is a diagram partially showing an example of a database.
Fig. 6 is a diagram showing the rest of the database of Fig. 5.
Fig. 7 is a diagram showing an example of a notch filter.
Fig. 8 is a diagram showing an example of a speed command creation unit.
Fig. 9 is a diagram showing an example of a gain correction unit.
Fig. 10 is a diagram showing an example of a proportional gain before correction and a proportional gain after correction in a filling process.
Fig. 11 is a diagram showing an example of a speed command before correction and a speed command after correction in the filling process.
Fig. 12 is a diagram showing another example of a setting correction unit.

### DETAILED DESCRIPTION OF THE INVENTION

Hereinafter, an embodiment of the present invention is described with reference to the drawings. In each drawing, the same reference numerals are assigned to the same or corresponding configurations, and descriptions thereof are omitted.

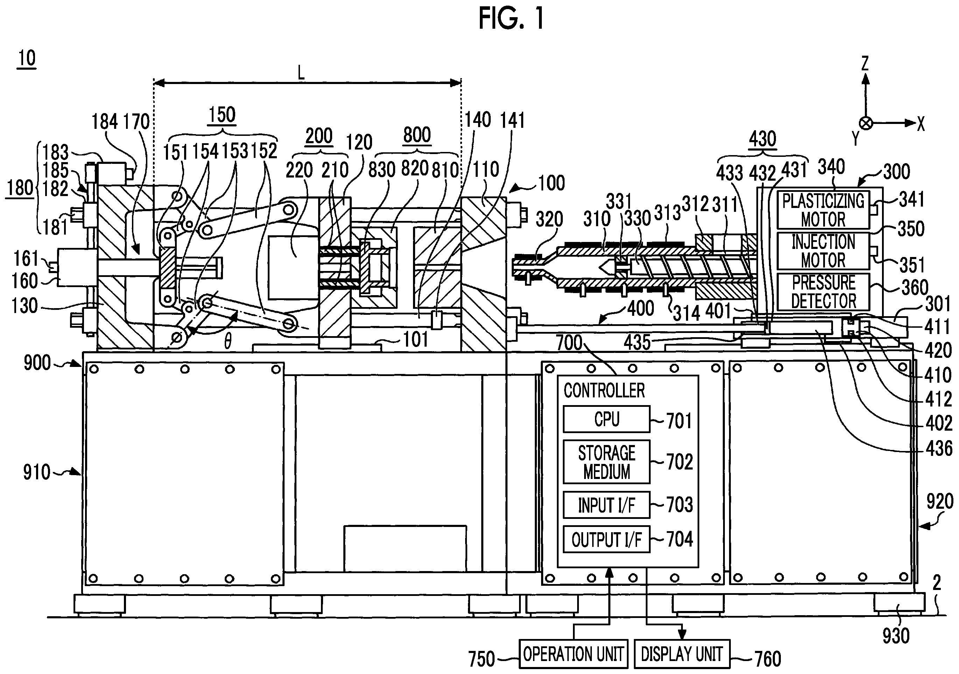

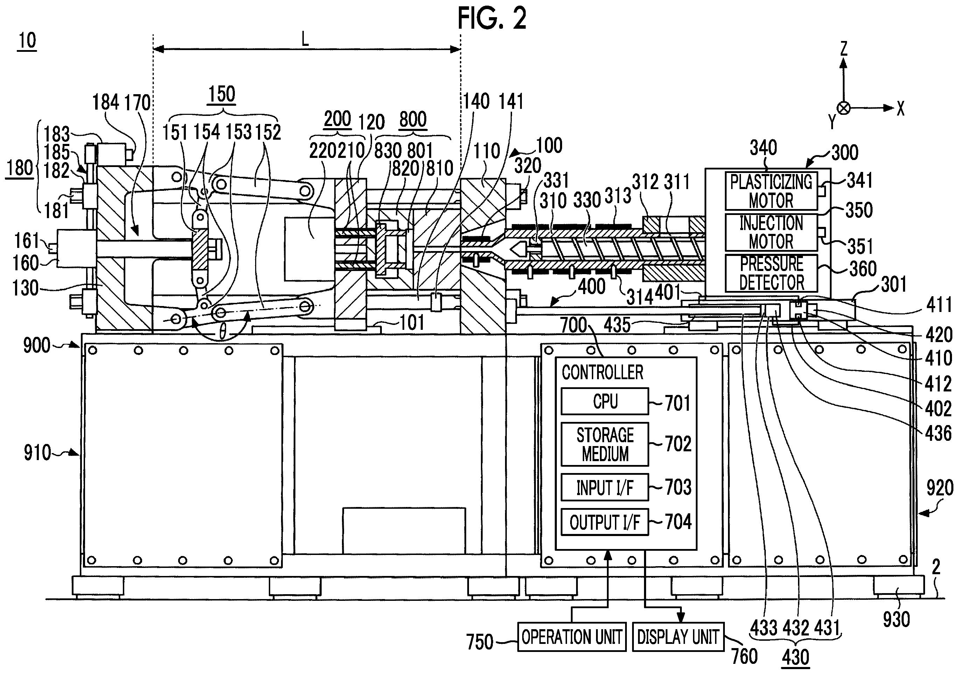

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which the stationary mold 810 is attached, a movable platen 120 to which the movable mold 820 is attached, a toggle support 130 which is disposed with a gap from the stationary platen 110, a tie bar 140 which connects the stationary platen 110 and the toggle support 130 to each other, a toggle mechanism 150 which moves the movable platen 120 with respect to the toggle support 130 in the mold opening and closing directions, a mold clamping motor 160 which operates the toggle mechanism 150, a motion conversion mechanism 170 which converts a rotary motion of the mold clamping motor 160 into a linear motion, and a mold space adjustment mechanism 180 which adjusts a gap between the stationary platen 110 and the toggle support 130.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed so as to be separated from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with a gap L therebetween in the mold opening and closing directions by the tie bar 140. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151 which moves in the mold opening and closing directions, and a pair of link groups which is bent and stretched by the movement of the crosshead 151. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 touches the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward or rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 has a cylinder 310 which heats the molding material, a nozzle 320 which is provided on a front end portion of the cylinder 310, a screw 330 which is disposed to be movable forward or rearward and rotatable in the cylinder 310, a plasticizing motor 340 which rotates the screw 330, an injection motor 350 which moves the screw 330 forward or rearward, and a pressure detector 360 which detects a force transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on a front end portion of the cylinder 310 and is pressed against the mold unit 800. The heating unit 313 and the temperature measurer 314 are provided on an outer periphery of the nozzle 320. The controller 700 controls the heating unit 313 such that a measured temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front side of the screw 330 and is accumulated in the front portion of the cylinder 310, and thus, the screw 330 moves rearward. Thereafter, when the screw 330 moves forward, the liquid molding material accumulated in the front side of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front side of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servomotor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flowpath 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be started during the mold opening process. In a case where an on/off valve which opens or closes the flow path of the nozzle 320 is provided, the mold opening process may be started during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to reduce the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to reduce the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 10 (including inputting the set value) or the like. Further, the user operates the input operation unit provided on the display screen, and thus, can operate the injection molding machine 10 corresponding to the input operation unit. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### (Adjustment Device of Injection Molding Machine)

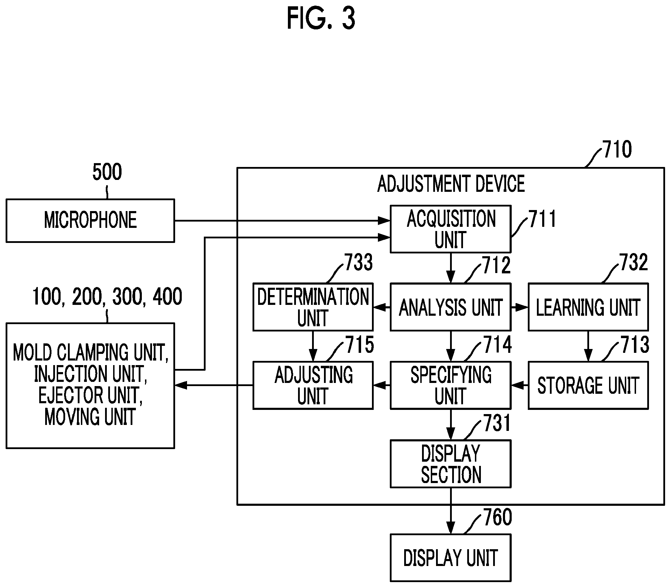

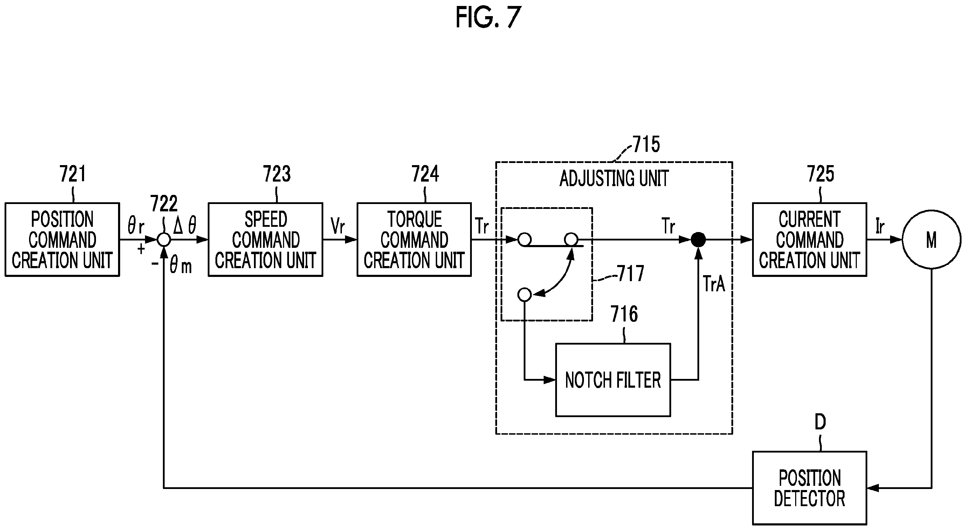

Fig. 3 is a diagram showing components of an adjustment device of the injection molding machine according to the embodiment in functional blocks. Each functional block shown in Fig. 3 is conceptual and does not necessarily need to be physically configured as shown. All or some of the functional blocks can be functionally or physically dispersed and integrated in any unit. All or some of processing functions performed in the functional blocks can be realized by a program executed by a CPU or can be realized as hardware by wired logic. The same applies to Figs. 7-9 and 12 described later.

The adjustment device 710 analyzes characteristics of the operating sound generated by the operations of machine parts constituting the injection molding machine 10, specifies the machine part in which the abnormal sound is generated, and then adjusts a command for the operation of the specified machine part. Therefore, when an abnormal sound is generated, it is possible to automatically suppress the generation of the abnormal sound. Unlike the related art, it is not necessary to continue the operation of the injection molding machine 10 or to interrupt the operation of the injection molding machine 10 in a state where the abnormal sound is generated until a skilled person such as a repairer arrives. In addition, there is no need for trial and error to specify the machine part in which the abnormal sound is generated and to adjust a parameter in order to suppress the generation of the abnormal sound. Therefore, a time until the operation of the injection molding machine 10 is restarted can be shortened. Further, since a technique acquired by the skilled person is stored in the adjustment device 710, there is no risk of the technique being interrupted.

The adjustment device 710 transmits/receives information with respect to the mold clamping unit 100, the ejector unit 200, the injection unit 300, the moving unit 400, or the like. For example, the information transmitted by the adjustment device 710 to the mold clamping unit 100 or the like is a command for the operation of a machine part such as a motor. Further, the information received by the adjustment device 710 from the mold clamping unit 100 and the like is an actual result. The actual result is detected by various detectors. The detector detects a position, speed, rotation speed, temperature, pressure, or the like.

The adjustment device 710 is provided as a portion of the injection molding machine 10, and is provided in the controller 700, for example. Since the adjustment device 710 is provided as a portion of the injection molding machine 10, it is possible to adjust the command for the operation of the machine parts of the injection molding machine 10 at an installation location of the injection molding machine 10. Compared with a case where the adjustment device 710 is provided in a remote place far away from the injection molding machine 10, when an abnormal sound is generated, it is possible to more quickly suppress the generation of the abnormal sound.

The adjustment device 710 may be provided separately from the injection molding machine 10, or may be provided so as to transmit and receive information with respect to the controller 700 of the injection molding machine 10 via a network such as the Internet. In this case, the adjustment device 710 transmits/receives information with respect to the mold clamping unit 100, the ejector unit 200, the injection unit 300, the moving unit 400, or the like via the controller 700.

As shown in Fig. 3, the adjustment device 710 has an acquisition unit 711 which acquires an operating sound by a microphone 500. The microphone 500 converts the operating sound into an electric signal, and transmits the converted electric signal to the acquisition unit 711. The acquisition unit 711 may store the operating sound of the machine parts of the injection molding machine 10 in association with the operation of the injection molding machine 10, for example, the process of the molding cycle. By storing the process and the operating sound in association with each other, the process in which the abnormal sound is generated can be specified. A machine part which is not operated in the specified process can be excluded from a candidate for a generation source of the abnormal sound, and thus, the generation source of the abnormal sound can be specified with high accuracy.

The operation stored in association with the operating sound is not limited to the process, and may include a rotation speed or a speed of the machine part. As will be described in detail later, a frequency of the abnormal sound may be a constant value peculiar to the machine part such as a resonance frequency. However, the frequency of the abnormal sound may be a variable value changed according to the rotation speed or the speed of the machine part. Even in the latter case, if the rotation speed or speed of the machine part is stored, the machine part in which the abnormal sound is generated can be specified.

The number of microphones 500 is one in the present embodiment, but may be plural. When the number of microphones 500 is plural, the microphone 500 also transmits an identification signal indicating the installation location to the acquisition unit 711. The acquisition unit 711 stores the operating sound of the machine part of the injection molding machine 10 for each microphone 500. By storing the operating sound in association with the installation location of the microphone 500, it is possible to specify a location where the abnormal sound is generated. A machine part installed at a location other than the specified location can be excluded from the candidate for the generation source of the abnormal sound, and the generation source of the abnormal sound can be specified with high accuracy.

As shown in Fig. 3, the adjustment device 710 has an analysis unit 712 which acquires the characteristics of the operating sound acquired by the acquisition unit 711. For example, the analysis unit 712 acquires the frequency characteristics of the operating sound by Fourier transform. The frequency characteristics of the operating sound include a frequency of a peak, intensity of the peak, a full width at half maximum of the peak, or the like.

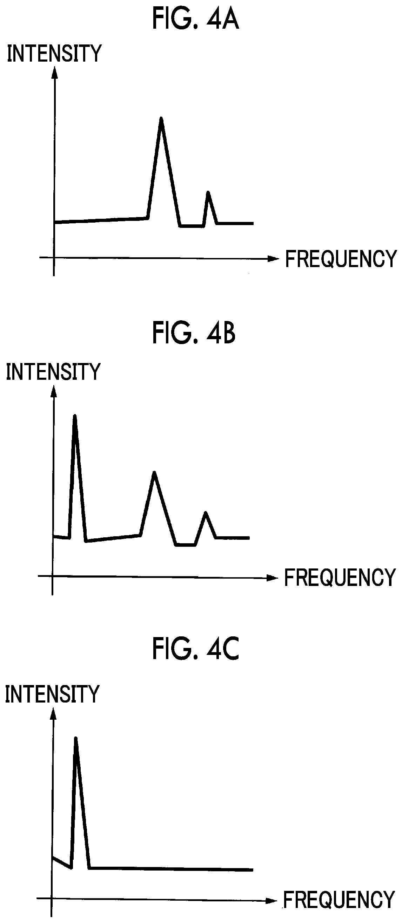

Fig. 4A is a diagram showing the frequency characteristics of the operating sound in a normal state, Fig. 4B is a diagram showing the frequency characteristics of the operating sound in an abnormal state, and Fig. 4C is a diagram showing the frequency characteristics of the abnormal sound. By comparing the frequency characteristics of the operating sound in the normal state with the frequency characteristics of the operating sound in the abnormal state, the frequency of the abnormal sound can be specified.

The analysis unit 712 may filter the frequency characteristics acquired by the Fourier transform and extract only a peak having the intensity equal to or more than a predetermined intensity. Since a noise can be removed, the frequency of the abnormal sound can be specified with high accuracy. The filtering may be performed before the Fourier transform processing.

The analysis unit 712 may store the frequency characteristics of the operating sound of the injection molding machine 10 in association with the operation of the injection molding machine 10, for example, the process of the molding cycle. A process in which abnormal sound is generated can be specified. A machine part which is not operated in the specified process can be excluded from the candidate for the generation source of the abnormal sound, and thus, the generation source of the abnormal sound can be specified with high accuracy.

Further, the analysis unit 712 may store the frequency characteristics of the operating sound of the injection molding machine 10 in association with the installation location of the microphone 500. The location where abnormal sound is generated can be specified. A machine part installed at a location other than the specified location can be excluded from the candidate for the generation source of the abnormal sound, and the generation source of the abnormal sound can be specified with high accuracy.

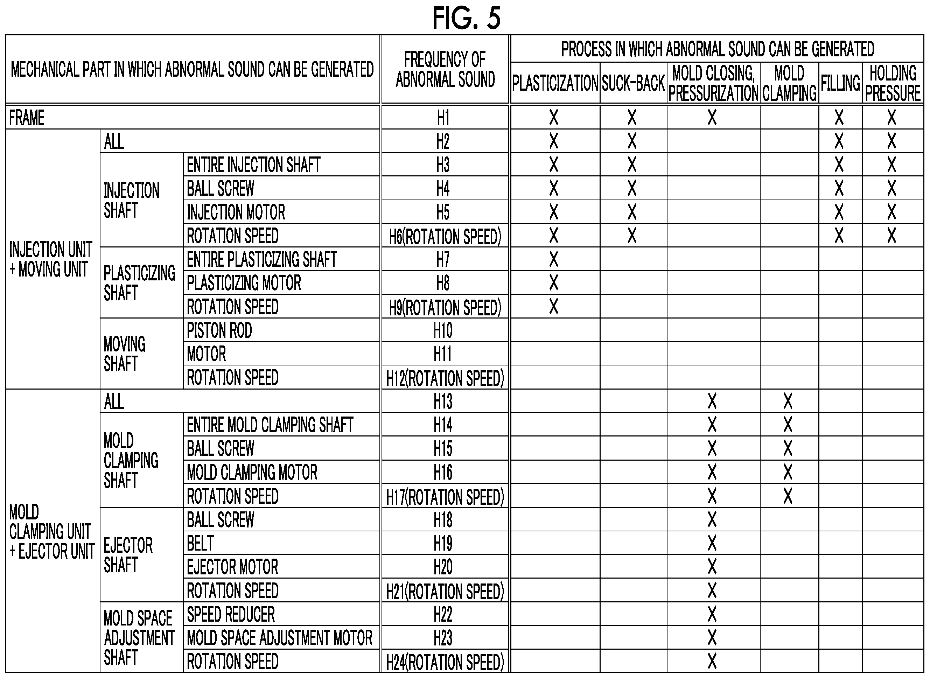

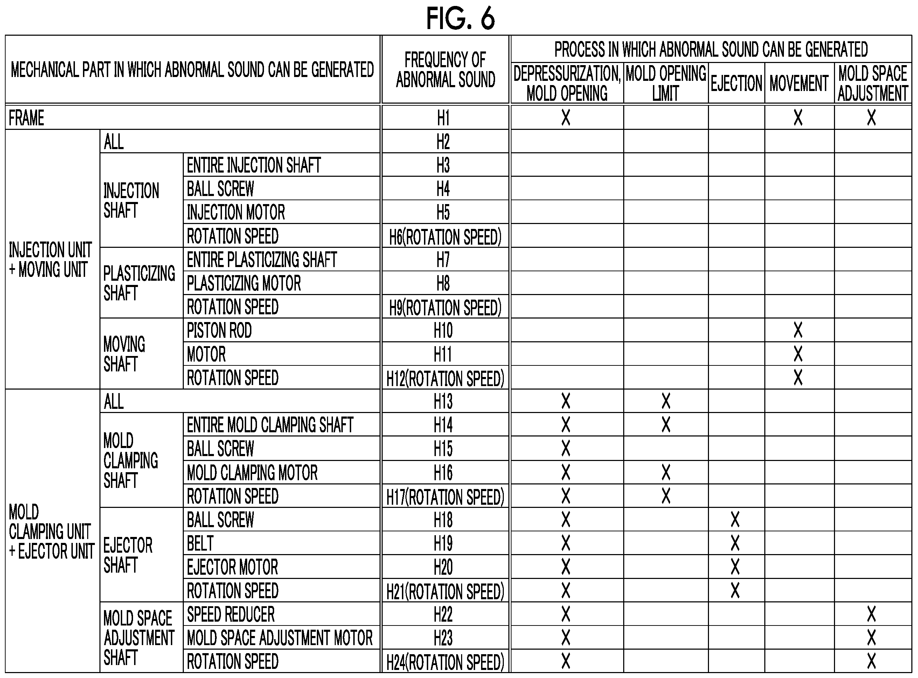

As shown in Fig. 3, the adjustment device 710 has a storage unit 713 which stores the characteristics of the abnormal sound generated by the operation of the machine part. When a plurality of machine parts are provided, the storage unit 713 stores the machine parts and the characteristics of the abnormal sounds generated by the operations of the machine parts in association with each other. Figs. 5 and 6 show an example of a database stored in the storage unit 713.

In Figs. 5 and 6, an "injection shaft" means a machine part which moves when the injection motor 350 is driven. For example, the injection shaft includes the injection motor 350, the ball screw which converts the rotary motion of the injection motor 350 into the linear motion of the screw 330, the screw 330, or the like.

A "plasticizing shaft" means a machine part which moves when the plasticizing motor 340 is driven. For example, the plasticizing shaft includes the plasticizing motor 340, the belt which transmits the rotary motion of the plasticizing motor 340, the screw 330, or the like.

A "movement shaft" means a machine part which moves when the motor 420 is driven. For example, the movement shaft includes the hydraulic pump 410, the hydraulic cylinder 430, or the like. The hydraulic cylinder 430 includes a piston rod 433 or the like.

A "mold clamping shaft" means a machine part which moves when the mold clamping motor 160 is driven. For example, the mold clamping shaft includes the mold clamping motor 160, the ball screw which converts the rotary motion of the mold clamping motor 160 into the linear motion of the crosshead 151, the toggle mechanism 150 which includes the crosshead 151, the movable platen 120 which is moved by the toggle mechanism 150, or the like.

An "ejector shaft" means a machine part which moves when the ejector motor is driven. For example, the ejector shaft includes the ejector motor, the motion conversion mechanism which converts the rotary motion of the ejector motor into the linear motion of the ejector rod 210, the ejector rod 210, or the like. For example, the motion conversion mechanism includes the belt, the ball screw, or the like.

A "mold space adjustment shaft" means a machine part that moves when the mold space adjustment motor 183 is driven. For example, the mold space adjustment shaft includes the rotational driving force transmission portion 185, the toggle support 130, or the like. As described above, the rotational driving force transmission portion 185 is constituted by a gear or the like, and includes a reduction gear.

For example, the storage unit 713 stores the frequency of an abnormal sound generated by the operation of a machine part. For example, the frequency of the abnormal sound is the resonance frequency of the machine part. The resonance frequency is a frequency peculiar to the machine part and is a constant value. The resonance frequency does not depend on the rotation speed or speed of the machine part. Not only the resonance frequency of each machine part but also the resonance frequency of a group including the plurality of machine parts operated at the same time may be registered in the database. In Figs. 5 and 6, H1 to H5, H7 to H8, H10 to H11, H13 to H16, H18 to H20, H22, and H23 are resonance frequencies and are constant values.

The storage unit 713 may store the frequency of the abnormal sound generated by the operation of the machine part as a function of the rotation speed or the speed of the machine part. The frequency of the abnormal sound may be changed depending on the rotation speed or speed of the machine part. Even in such a case, it is possible to specify the machine part which generates the abnormal sound. For example, the frequency of abnormal sound is proportional to the rotation speed or speed of the machine part. In this case, a proportional constant is registered in the database. In Figs. 5 and 6, H6, H9, H12, H17, H21, and H24 are functions of the rotation speed of the machine part.

In Figs. 5 and 6, "X" represents the process in which the abnormal sound of each machine part is generated. For example, the mold clamping motor 160 may generate the abnormal sound due to the mold closing, the pressurization, the mold clamping, the depressurization, the mold opening, a mold opening limit, or the like. The "mold opening limit" is a process of driving the mold clamping motor 160 in order to maintain the position of the crosshead 151 at the mold opening completion position.

As shown in Figs. 5 and 6, the storage unit 713 may store the frequency of the abnormal sound generated by the operation of the machine part in association with the operation of the injection molding machine 10, for example, the process. The process in which the abnormal sound is generated can be specified. The machine part which is not operated in the specified process can be excluded from the candidates for the generation source of the abnormal sound, and it is possible to specify the generation source of the abnormal sound with high accuracy.

As shown in Fig. 3, the adjustment device 710 has a specifying unit 714 which specifies the machine part in which the abnormal sound is generated from the characteristics acquired by the analysis unit 712 and the characteristics stored in the storage unit 713. For example, the specifying unit 714 compares the frequency characteristics acquired by the analysis unit 712 with the frequency of the abnormal sound stored in the storage unit 713, and specifies the machine part in which the abnormal sound is generated.

For example, the specifying unit 714 compares the frequency characteristics of the operating sound in the normal state shown in Fig. 4A with the frequency characteristics of the operating sound in the abnormal state shown in Fig. 4B, and specifies the frequency of the peak of the abnormal sound shown in Fig. 4C. Next, the specifying unit 714 specifies the machine part in which the abnormal sound is generated from the frequency of the peak of the specified abnormal sound and the databases shown in Figs. 5 and 6.

In addition to the frequency characteristics acquired by the analysis unit 712 and the frequency of the abnormal sound stored in the storage unit 713, the specifying unit 714 may also consider the rotation speed or speed of the machine part to specify the machine part in which the abnormal sound is generated. Even when the frequency of the abnormal sound changes according to the rotation speed or speed of the machine part, the machine parts in which the abnormal sound is generated can be specified.

The specifying unit 714 may specify the machine part in which the abnormal sound is generated from the characteristics acquired by the analysis unit 712, the characteristics stored in the storage unit 713, and the process in which the abnormal sound is generated. When the process in which the abnormal sound is generated is specified, the machine part which is not operated in the specified process can be excluded from the candidate for the generation source of the abnormal sound, and thus, it is possible to specify the generation source of the abnormal sound with high accuracy.

As shown in Fig. 3, the adjustment device 710 has an adjusting unit 715 which adjusts the command for the operation of the machine part specified by the specifying unit 714. Therefore, when an abnormal sound is generated, it is possible to automatically suppress the generation of the abnormal sound. Therefore, unlike the related art, it is not necessary to continue the operation of the injection molding machine 10 or to interrupt the operation of the injection molding machine 10 in the state where the abnormal sound is generated.

As shown in Fig. 7, the adjusting unit 715 may include a notch filter 716 which corrects the command so as to remove a frequency component of the abnormal sound from the command for the operation of the machine part specified by the specifying unit 714. Hereinafter, the notch filter 716 will be described. However, before the notch filter 716 will be described, the command for the operation of the machine part will be described with reference to Fig. 7.

The controller 700 includes a position command creation unit 721, a subtractor 722, a speed command creation unit 723, a torque command creation unit 724, and a current command creation unit 725 in order to perform a feedback-control. The position command creation unit 721 creates a position command θr of the machine part which is a target of a position control. The subtractor 722 calculates a deviation Δθ between the position command θr and a position actual result θm. The position actual result θm is detected by a position detector D. For example, the position detector D is an encoder of the motor M. For example, the motor M is the mold clamping motor 160, the ejector motor, the plasticizing motor 340, the injection motor 350, or the motor 420. The speed command creation unit 723 creates a speed command Vr so that the position command θr and the position actual result θm match with each other, that is, the deviation Δθ becomes zero. The torque command creation unit 724 creates the torque command Tr so that the speed command Vr and a speed actual result match with each other. The current command creation unit 725 creates a current command Ir so that the torque command Tr and the torque actual result match with each other. A current is supplied to the motor M and the motor M is driven so that the current command Ir and a current actual result match with each other.

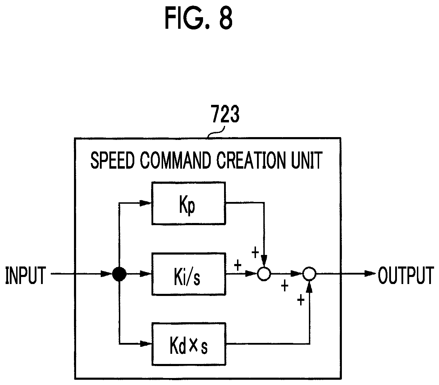

The position command creation unit 721 creates the position command θr according to the setting input to the input operation unit of the display screen. As shown in Fig. 8, the speed command creation unit 723 creates the speed command Vr by a PID calculation or the like. In Fig. 8, Kp is a proportional gain, Ki is an integral gain, Kd is a differential gain, and s is a complex number. The speed command creation unit 723 may create a command by a PI calculation instead of the PID calculation. The torque command creation unit 724 creates the torque command Tr by the PID calculation, the PI calculation, or the like, similarly to the speed command creation unit 723. Further, the current command creation unit 725 creates the current command Ir by the PID calculation, the PI calculation, or the like, similarly to the speed command creation unit 723. Control gains such as the proportional gain Kp, the integral gain Ki, and the differential gain Kd are set for each type of the command.

Next, the notch filter 716 will be described with reference to Fig. 7 again. As described above, the notch filter 716 corrects the command so as to remove the frequency component of the abnormal sound from the command for the operation of the machine part specified by the specifying unit 714. For example, the notch filter 716 corrects the torque command Tr so as to remove the frequency component of the abnormal sound from the torque command Tr. The frequency component of the abnormal sound to be removed is the frequency of the operating sound of the machine part specified by the specifying unit 714. The current command creation unit 725 creates the current command Ir so that the torque command Tr corrected by the notch filter 716 and the torque actual result match with each other.

For example, the notch filter 716 is used when the mold clamping shaft or the like resonates during the mold closing process or the mold opening process, and the torque command Tr for the mold clamping motor 160 is corrected so as to remove a resonance frequency component of the mold clamping shaft. The command corrected by the notch filter 716 is not limited to the torque command Tr.

The adjusting unit 715 may further include a switching unit 717 for switching whether or not to correct the command by the notch filter 716. The switching unit 717 corrects the command by the notch filter 716 only when the abnormal sound is generated, and does not correct the command by the notch filter 716 when the abnormal sound is not generated. When the abnormal sound is not generated, an unnecessary calculation can be omitted and the command can be output quickly.

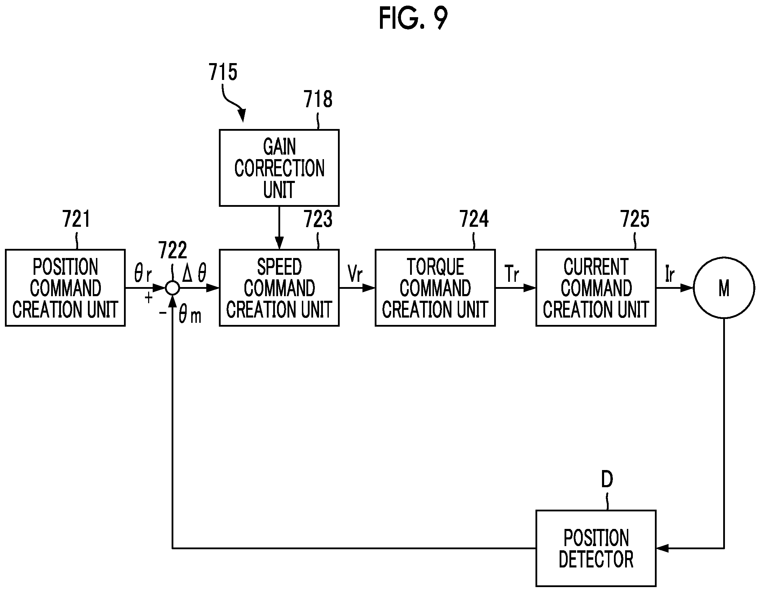

Next, a gain correction unit will be described with reference to Fig. 9. As shown in Fig. 9, the adjusting unit 715 includes a gain correction unit 718 which corrects a control gain used for calculating the command so as to reduce loudness of the abnormal sound of the machine part specified by the specifying unit 714. For example, the control gain is the proportional gain Kp, the integral gain Ki, or the differential gain Kd.

For example, when an abnormal sound having a short time and a high height is generated in the filling process, acceleration or deceleration of the machine part is too rapid. In this case, the gain correction unit 718 corrects the proportional gain Kp of the speed command creation unit 723 so that the operation of the injection motor 350 becomes gentle. The height of the sound depends on the frequency of the sound, and the higher the frequency of the sound, the higher the height of the sound.

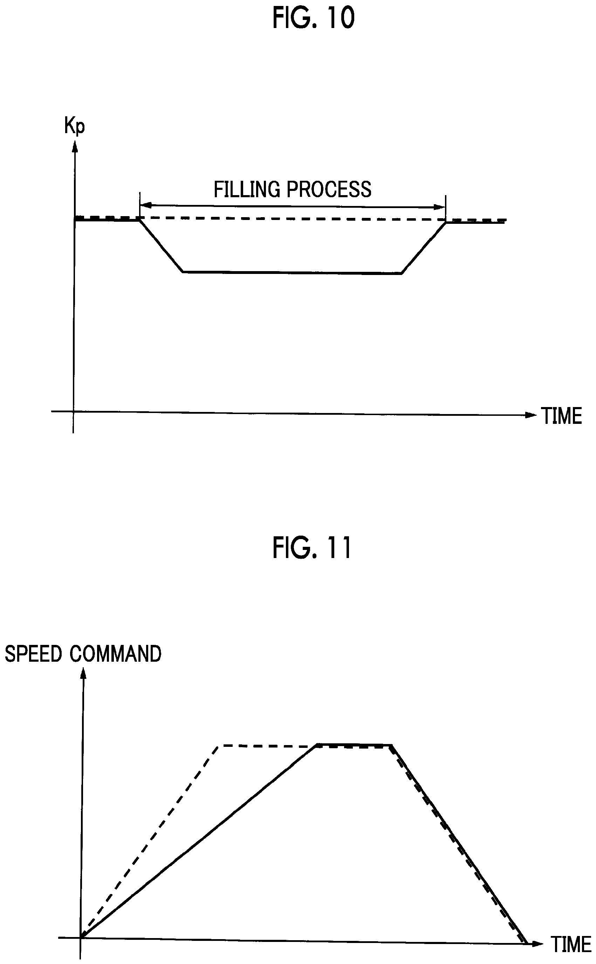

Fig. 10 is a diagram showing an example of the proportional gain before correction and the proportional gain after correction. In Fig. 10, a broken line is the proportional gain before correction, and a solid line is the proportional gain after correction. When an abnormal sound having a short time and a high height is generated in the filling process, as shown in Fig. 10, the gain correction unit 718 corrects the proportional gain Kp of the speed command creation unit 723 so that the proportional gain Kp decreases.

Fig. 11 is a diagram showing an example of a speed command before correction and a speed command after correction. In Fig. 11, a broken line is the speed command before correction, and a solid line is the speed command after correction. By correcting the proportional gain Kp shown in Fig. 10, a rising phase of the speed command can be made gentle as shown in Fig. 11. As a result, it is possible to reduce the loudness of the abnormal sound having a short time and a high height in the filling process. The gain correction unit 718 may correct the proportional gain Kp so that the end of the speed command is gradual.

When the filling process ends, as shown in Fig. 10, the gain correction unit 718 may return the proportional gain Kp of the speed command creation unit 723 to the original value. This is because another process such as the holding pressure process is performed after the filling process. After the holding pressure process, the next plasticizing process is performed. In the holding pressure process or the plasticizing process, the proportional gain Kp before correction may be used.

The gain correction unit 718 can be applied to a process other than the filling process. For example, when an abnormal sound having a low height is generated in the mold clamping process, the mold clamping motor 160 tries to generate a larger torque, and the current of the mold clamping motor 160 fluctuates and becomes unstable. In this case, the gain correction unit 718 corrects the proportional gain Kp of the speed command creation unit 723 so that the proportional gain Kp decreases in order to make the operation of the mold clamping motor 160 gentle. As a result, it is possible to reduce the loudness of an abnormal sound having a low roaring height.

Moreover, the gain correction unit 718 can be applied to a process in which a pressure control is performed, for example, the holding pressure process or the plasticizing process. In the holding pressure process, the injection motor 350 is driven to push the screw 330 forward, and the pressure of the molding material at the front end portion of the screw 330 is maintained at a set pressure. In the plasticizing process, in order to restrict an abrupt rearward movement of the screw 330, the injection motor 350 is driven so as to apply a set back pressure to the screw 330.

The gain correction unit 718 corrects the control gain of the speed command creation unit 723 in the present embodiment. However, the gain correction unit 718 may correct the control gains of other command creation units. For example, the gain correction unit 718 may correct the control gain of the torque command creation unit 724, or may correct the control gain of the current command creation unit 725.

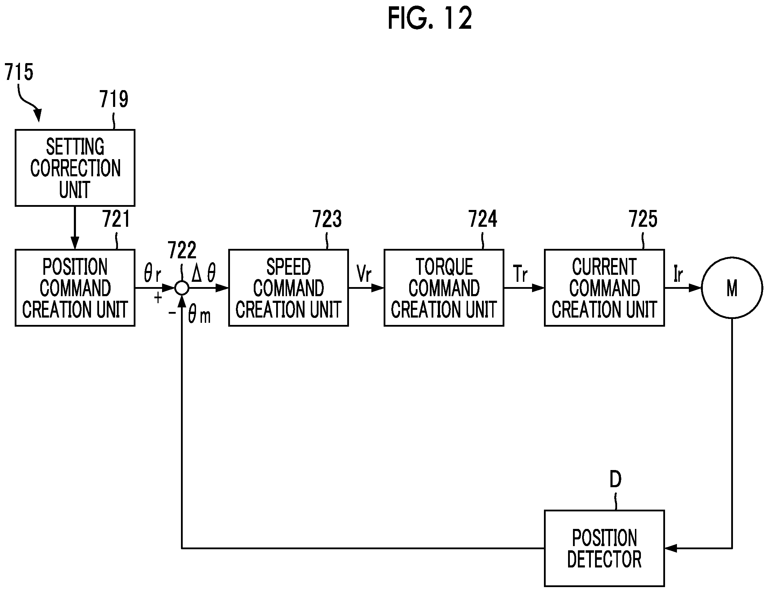

Next, a setting correction unit will be described with reference to Fig. 12. As shown in Fig. 12, the adjusting unit 715 may include a setting correction unit 719 which corrects the setting input in advance so as to reduce the loudness of the abnormal sound of the machine part specified by the specifying unit 714. As described above, the setting is input to and stored in the controller 700 by operating the input operation unit provided on the display screen.

For example, as described above, when an abnormal sound having a short time and a high height is generated in the filling process, the acceleration or deceleration of the machine part is too rapid. In this case, as shown in Fig. 11, the setting correction unit 719 may correct the position setting so that the rising phase of the speed command becomes gentle. The setting correction unit 719 can obtain the same effect as that of the gain correction unit 718. The setting correction unit 719 may correct the position setting so that the end of the speed command is gradual.

The adjustment device 710 may have a display section 731 which displays a content specified by the specifying unit 714 on the display unit 760. For example, the content displayed on the display unit 760 by the display section 731 includes the machine part which generates the abnormal sound, the characteristics such as the frequency of the abnormal sound, and the setting to be changed in order to reduce the loudness of the abnormal sound. By displaying the content specified by the specifying unit 714, it is possible to attract attention of the user of the injection molding machine 10. The user can change the setting by operating the input operation unit provided on the display screen while looking at the display screen displayed by the display section 731.

Further, as shown in Fig. 3, the adjustment device 710 may include a learning unit 732 which acquires the characteristics of the operating sound when the machine part in which the abnormal sound is generated has been specified by the analysis unit 712 and updates the database stored in the storage unit 713. By updating the database by the learning unit 732, it is possible to improve accuracy of specifying the machine part which generates the abnormal sound.

Further, as shown in Fig. 3, the adjustment device 710 may include a determination unit 733 for determining whether or not the loudness of the abnormal sound can be reduced after adjusting the command by the adjusting unit 715. In this case, after the command is adjusted by the adjusting unit 715, the acquisition unit 711 acquires the operating sound, and the analysis unit 712 acquires the characteristics of the operating sound acquired by the acquisition unit 711. From the characteristics, the determination unit 733 determines whether or not the loudness of the abnormal sound can be reduced.

For example, when intensity of a peak of the abnormal sound is smaller than a threshold, the determination unit 733 determines that the loudness of the abnormal sound can be reduced. Further, when the intensity of the peak of the abnormal sound is equal to or more than the threshold, the determination unit 733 determines that the loudness of the abnormal sound could not be reduced. The threshold may be predetermined, or the intensity of the peak of the abnormal sound acquired before the adjustment of the command may be used.

When the determination unit 733 determines that the loudness of the abnormal sound can be reduced, the operation of the injection molding machine 10 is continued. Meanwhile, when the determination unit 733 determines that the loudness of the abnormal sound could not be reduced, the adjusting unit 715 adjusts the command again. The adjusting unit 715 repeatedly adjusts the command until the determination unit 733 determines that the loudness of the abnormal sound can be reduced.

When the determination unit 733 determines that the loudness of the abnormal sound cannot be reduced even if the adjusting unit 715 adjusts the command a predetermined number of times, the operation of the injection molding machine 10 is stopped. When the determination unit 733 determines that the loudness of the abnormal sound cannot be reduced even if the adjusting unit 715 adjusts the command once, the operation of the injection molding machine 10 may be stopped.

By the way, as a result of the adjusting unit 715 adjusting the command so as to reduce the loudness of one abnormal sound, another abnormal sound may be generated. In this case, the operation of the injection molding machine 10 may be stopped, or the adjusting unit 715 may adjust the command so as to reduce the loudness of another abnormal sound.

The storage unit 713 may store history of command adjustment by the adjusting unit 715. The storage unit 713 may store the history of the command adjustment and the number of shots in association with each other. This is because the command adjustment by the adjusting unit 715 may cause quality of the molding product to be divided into a non-defective product and a defective product, or may cause other abnormalities to occur.

Hereinbefore, the adjustment device for the injection molding machine and the embodiment of the injection molding machine according to the present invention are described. However, the present invention is not limited to the above-described embodiment and is defined by the appended claims.

### Brief Description of the Reference Symbols

- 10:: injection molding machine
- 100:: mold clamping unit
- 200:: ejector unit
- 300:: injection unit
- 400:: moving unit
- 700:: controller
- 710:: adjustment device
- 711:: acquisition unit
- 712:: analysis unit
- 713:: storage unit
- 714:: specifying unit
- 715:: adjusting unit
- 716:: notch filter
- 717:: switching unit
- 718:: gain correction unit
- 719:: setting correction unit

## Claims

1. An adjustment device (710) of an injection molding machine (10), **characterized by** comprising:
an acquisition unit (711) configured to acquire an operating sound generated by an operation of a machine part constituting the injection molding machine (10);
an analysis unit (712) configured to acquire characteristics of the operating sound acquired by the acquisition unit (711);
a storage unit (713) configured to store characteristics of an abnormal sound generated by the operation of the machine part;
a specifying unit (714) configured to specify the machine part in which the abnormal sound is generated from the characteristics acquired by the analysis unit (712) and the characteristics stored in the storage unit (713); and
an adjusting unit (715) configured to adjust a command for the operation of the machine part specified by the specifying unit (714).

2. The adjustment device (710) of an injection molding machine (10) according to claim 1,
wherein the adjusting unit (715) includes a notch filter (716) configured to correct the command to remove a frequency component of the abnormal sound from the command for the operation of the machine part specified by the specifying unit (714) .

3. The adjustment device (710) of an injection molding machine (10) according to claim 2,
wherein the adjusting unit (715) further includes a switching unit (717) configured to switch whether or not to correct the command by the notch filter (716).

4. The adjustment device (710) of an injection molding machine (10) according to any one of claims 1 to 3,
wherein the adjusting unit (715) includes a gain correction unit (718) configured to correct a control gain used for calculating the command so as to reduce loudness of the abnormal sound of the machine part specified by the specifying unit (714).

5. The adjustment device (710) of an injection molding machine (10) according to any one of claims 1 to 4,
wherein the adjusting unit (715) includes a setting correction unit (719) configured to correct a setting input in advance so as to reduce loudness of the abnormal sound of the machine part specified by the specifying unit (714).

6. The adjustment device (710) of an injection molding machine (10) according to any one of claims 1 to 5,
wherein the analysis unit (712) acquires frequency characteristics of the operating sound by Fourier transform,
the storage unit (713) stores a frequency of the abnormal sound generated by the operation of the machine part, and
the specifying unit (714) compares the frequency characteristics acquired by the analysis unit (712) with the frequency of the abnormal sound stored in the storage unit (713) to specify the machine part in which the abnormal sound is generated.

7. The adjustment device (710) of an injection molding machine (10) according to claim 6,
wherein the storage unit (713) stores the frequency of the abnormal sound generated by the operation of the machine part as a function of a rotation speed or a speed of the machine part, and
the specifying unit (714) specifies the machine part in which the abnormal sound is generated from the frequency characteristics acquired by the analysis unit (712), the frequency of the abnormal sound stored in the storage unit (713), and the rotation speed or speed of the machine part.

8. The adjustment device (710) of an injection molding machine (10) according to any one of claims 1 to 7,
wherein the storage unit (713) stores a process in which an abnormal sound is generated by the operation of the machine part, and
the specifying unit (714) specifies the machine part in which the abnormal sound is generated from the characteristics acquired by the analysis unit (712), the characteristics stored in the storage unit (713), and the process in which the abnormal sound is generated.

9. An injection molding machine (10) comprising:
a mold clamping unit (100) configured to open and close a mold unit (800);
an ejector unit (200) configured to eject a molding product molded by the mold unit (800);
an injection unit (300) configured to inject a molding material into the mold unit (800);
a moving unit (400) configured to move the injection unit (300) forward or rearward with respect to the mold unit (800); and
a controller configured to control the mold clamping unit (100), the ejector unit (200), the injection unit (300), and the moving unit (400),
wherein the controller includes the adjustment device (710) according to any one of claims 1 to 8.

## Patentansprüche

1. Einstellvorrichtung (710) einer Spritzgießmaschine (10), **dadurch gekennzeichnet, dass** sie umfasst:
eine Erfassungseinheit (711), die konfiguriert ist, ein Betriebsgeräusch zu erfassen, das durch einen Betrieb eines Maschinenteils, das die Spritzgießmaschine (10) bildet, erzeugt wird;
eine Analyseeinheit (712), die konfiguriert ist, Charakteristiken des Betriebsgeräusches, das durch die Erfassungseinheit (711) erfasst wird, zu erfassen;
eine Speichereinheit (713), die konfiguriert ist, Charakteristiken eines abnormalen Geräusches, das durch den Betrieb des Maschinenteils erzeugt wird, zu speichern;
eine Bestimmungseinheit (714), die konfiguriert ist, anhand der Charakteristiken, die von der Analyseeinheit (712) erfasst werden, und der Charakteristiken, die in der Speichereinheit (713) gespeichert sind, das Maschinenteil, in welchem das abnormale Geräusch erzeugt wird, zu bestimmen; und
eine Einstelleinheit (715), die konfiguriert ist, einen Befehl für den Betrieb des Maschinenteils, das von der Bestimmungseinheit (714) bestimmt wird, einzustellen.

2. Einstellvorrichtung (710) einer Spritzgießmaschine (10) nach Anspruch 1,
wobei die Einstelleinheit (715) einen Kerbfilter (716) umfasst, der konfiguriert ist, den Befehl, eine Frequenzkomponente des abnormalen Geräusches aus dem Befehl für den Betrieb des Maschinenteils, das von der Bestimmungseinheit (714) bestimmt wurde, zu entfernen, zu korrigieren.

3. Einstellvorrichtung (710) einer Spritzgießmaschine (10) nach Anspruch 2,
wobei die Einstelleinheit (715) ferner eine Schalteinheit (717) umfasst, die konfiguriert ist, umzuschalten, ob der Befehl durch den Kerbfilter (716) zu korrigieren ist oder nicht.

4. Einstellvorrichtung (710) einer Spritzgießmaschine (10) nach einem der Ansprüche 1 bis 3,
wobei die Einstelleinheit (715) eine Verstärkungskorrektureinheit (718) umfasst, die konfiguriert ist, eine Steuerverstärkung, die zum Berechnen des Befehls verwendet wird, zu korrigieren, sodass Lautstärke des abnormalen Geräusches des Maschinenteils, das von der Bestimmungseinheit (714) bestimmt wird, verringert wird.

5. Einstellvorrichtung (710) einer Spritzgießmaschine (10) nach einem der Ansprüche 1 bis 4,
wobei die Einstelleinheit (715) eine Einstellkorrektureinheit (719) umfasst, die konfiguriert ist, eine Einstelleingabe im Voraus zu korrigieren, sodass Lautstärke des abnormalen Geräusches des Maschinenteils, das von der Bestimmungseinheit (714) bestimmt wird, verringert wird.

6. Einstellvorrichtung (710) einer Spritzgießmaschine (10) nach einem der Ansprüche 1 bis 5,
wobei die Analyseeinheit (712) Frequenzcharakteristiken des Betriebsgeräusches durch Fourier-Transformation erfasst,
die Speichereinheit (713) eine Frequenz des abnormalen Geräusches, das durch den Betrieb des Maschinenteils erzeugt wird, speichert, und
die Bestimmungseinheit (714) die Frequenzcharakteristiken, die von der Analyseeinheit (712) erfasst werden, mit der Frequenz des abnormalen Geräusches vergleicht, das in der Speichereinheit (713) gespeichert ist, um das Maschinenteil, in welchem das abnormale Geräusch erzeugt wird, zu bestimmen.

7. Einstellvorrichtung (710) einer Spritzgießmaschine (10) nach Anspruch 6,
wobei die Speichereinheit (713) die Frequenz des abnormalen Geräusches, das durch den Betrieb des Maschinenteils erzeugt wird, als eine Funktion einer Drehzahl oder einer Geschwindigkeit des Maschinenteils speichert, und
die Bestimmungseinheit (714) das Maschinenteil, in welchem das abnormale Geräusch erzeugt wird, anhand der Frequenzcharakteristiken, die durch die Analyseeinheit (712) erfasst werden, der Frequenz des abnormalen Geräusches, das in der Speichereinheit (713) gespeichert ist, und der Drehzahl oder Geschwindigkeit des Maschinenteils bestimmt.

8. Einstellvorrichtung (710) einer Spritzgießmaschine (10) nach einem der Ansprüche 1 bis 7,
wobei die Speichereinheit (713) einen Prozess speichert, bei welchem ein abnormales Geräusch durch den Betrieb des Maschinenteils erzeugt wird, und die Bestimmungseinheit (714) anhand der Charakteristiken, die durch die Analyseeinheit (712) erfasst werden, der Charakteristiken, die in der Speichereinheit (713) gespeichert sind, und des Prozesses, bei welchem das abnormale Geräusch erzeugt wird, das Maschinenteil, in welchem das abnormale Geräusch erzeugt wird, bestimmt.

9. Spritzgießmaschine (10), umfassend:
eine Formschließ-/klemmeinheit (100), die konfiguriert ist, eine Formeinheit (800) zu öffnen und zu schließen;
eine Auswerfereinheit (200), die konfiguriert ist, ein Formerzeugnis auszuwerfen, das von der Formeinheit (800) geformt wird;
eine Spritzeinheit (300), die konfiguriert ist, ein Formmaterial in die Formeinheit (800) einzuspritzen;
eine Bewegungseinheit (400), die konfiguriert ist, die Spritzeinheit (300) in Bezug auf die Formeinheit (800) vorwärts oder rückwärts zu bewegen; und
eine Steuerung, die konfiguriert ist, die Formschließ-/klemmeinheit (100), die Auswerfereinheit (200), die Spritzeinheit (300) und die Bewegungseinheit (400) zu steuern,
wobei die Steuerung die Einstellvorrichtung (710) nach einem der Ansprüche 1 bis 8 umfasst.

## Revendications

1. Un dispositif de réglage (710) d'une machine de moulage par injection (10), **caractérisé en ce qu'**il comprend :
une unité d'acquisition (711) configurée pour acquérir un son de fonctionnement généré par un fonctionnement d'une partie de machine constituant la machine de moulage par injection (10) ;
une unité d'analyse (712) configurée pour acquérir des caractéristiques du son de fonctionnement acquis par l'unité d'acquisition (711) ;
une unité de stockage (713) configurée pour stocker des caractéristiques d'un son anormal généré par le fonctionnement de la partie de machine ;
une unité de spécification (714) configurée pour spécifier la partie de machine dans laquelle le son anormal est généré à partir des caractéristiques acquises par l'unité d'analyse (712) et des caractéristiques stockées dans l'unité de stockage (713) ; et
une unité de réglage (715) configurée pour régler une instruction pour le fonctionnement de la partie de machine spécifiée par l'unité de spécification (714).

2. Le dispositif de réglage (710) d'une machine de moulage par injection (10) selon la revendication 1,
dans lequel l'unité de réglage (715) inclut un filtre coupe-bande (716) configuré pour corriger l'instruction afin de supprimer une composante de fréquence du son anormal de l'instruction pour le fonctionnement de la partie de machine spécifiée par l'unité de spécification (714).

3. Le dispositif de réglage (710) d'une machine de moulage par injection (10) selon la revendication 2,
dans lequel l'unité de réglage (715) inclut en outre une unité de commutation (717) configurée pour commuter s'il convient ou non de corriger l'instruction par le biais du filtre coupe-bande (716).

4. Le dispositif de réglage (710) d'une machine de moulage par injection (10) selon l'une quelconque des revendications 1 à 3,
dans lequel l'unité de réglage (715) comprend une unité de correction de gain (718) configurée de manière à corriger un gain de commande utilisé en vue de calculer l'instruction de manière à réduire l'intensité du son anormal de la partie de machine spécifiée par l'unité de spécification (714).

5. Le dispositif de réglage (710) d'une machine de moulage par injection (10) selon l'une quelconque des revendications 1 à 4,
dans lequel l'unité de réglage (715) inclut une unité de correction de configuration (719) configurée de manière à corriger à l'avance une entrée de configuration de manière à réduire l'intensité du son anormal de la partie de machine spécifiée par l'unité de spécification (714).

6. Le dispositif de réglage (710) d'une machine de moulage par injection (10) selon l'une quelconque des revendications 1 à 5,
dans lequel l'unité d'analyse (712) acquiert des caractéristiques de fréquence du son de fonctionnement par le biais d'une transformée de Fourier ;
l'unité de stockage (713) stocke une fréquence du son anormal généré par le fonctionnement de la partie de machine ; et
l'unité de spécification (714) compare les caractéristiques de fréquence acquises par l'unité d'analyse (712) à la fréquence du son anormal stockée dans l'unité de stockage (713), en vue de spécifier la partie de machine dans laquelle le son anormal est généré.

7. Le dispositif de réglage (710) d'une machine de moulage par injection (10) selon la revendication 6,
dans lequel l'unité de stockage (713) stocke la fréquence du son anormal généré par le fonctionnement de la partie de machine en fonction d'une vitesse de rotation ou d'une vitesse de la partie de machine ; et
l'unité de spécification (714) spécifie la partie de machine dans laquelle le son anormal est généré à partir des caractéristiques de fréquence acquises par l'unité d'analyse (712), de la fréquence du son anormal stockée dans l'unité de stockage (713), et de la vitesse de rotation ou de la vitesse de la partie de machine.

8. Le dispositif de réglage (710) d'une machine de moulage par injection (10) selon l'une quelconque des revendications 1 à 7,
dans lequel l'unité de stockage (713) stocke un processus dans lequel un son anormal est généré par le fonctionnement de la partie de machine ; et
l'unité de spécification (714) spécifie la partie de machine dans laquelle le son anormal est généré à partir des caractéristiques acquises par l'unité d'analyse (712), des caractéristiques stockées dans l'unité de stockage (713), et du processus dans lequel le son anormal est généré.

9. Une machine de moulage par injection (10) comprenant :
une unité de serrage de moule (100) configurée pour ouvrir et fermer une unité de moule (800) ;
une unité d'éjection (200) configurée pour éjecter un produit de moulage moulé par l'unité de moule (800) ;
une unité d'injection (300) configurée pour injecter un matériau de moulage dans l'unité de moule (800) ;
une unité de déplacement (400) configurée pour déplacer l'unité d'injection (300) vers l'avant ou vers l'arrière par rapport à l'unité de moule (800) ; et
un contrôleur configuré pour commander l'unité de serrage de moule (100), l'unité d'éjection (200), l'unité d'injection (300), et l'unité de déplacement (400) ;
dans lequel le contrôleur inclut le dispositif de réglage (710) selon l'une quelconque des revendications 1 à 8.
